# EUROPEAN PATENT APPLICATION

(11) **EP 3 128 768 A1**
(43) Date of publication of application: **08.02.2017**
(21) Application number: 15774290.9
(22) Date of filing: 25.03.2015
(51) Int. Cl.: H04W 4/00, H04W 48/10, H04W 84/10

(54) **COMMUNICATION SYSTEM, COMMUNICATION TERMINAL, COMMUNICATION METHOD, AND PROGRAM**

(30) Priority: 31.03.2014 JP 2014073543
(71) Applicant: NTT DOCOMO, INC., Chiyoda-ku Tokyo 100-6150 (JP); Ase Co., Ltd., Tokyo 112-0004 (JP)
(72) Inventor: ISHII, Akira, Tokyo 100-6150 (JP); KIKUCHI, Daisuke, Tokyo 100-6150 (JP); NAKAGAWA, Daisuke, Tokyo 112-0004 (JP); NAKASHIMA, Toshio, Tokyo 112-0004 (JP)
(74) Representative: Hoffmann Eitle
(86) International application number: PCT/JP2015/059255
(87) International publication number: WO 2015/151981

(57) **Abstract**

Beacon 300 transmits a beacon identifier "B1". Server apparatus 100 determines whether or not a condition for changing the beacon identifier "B1" is met. In the case where server apparatus 100 has determined that the condition is met, communication terminal 200-1 establishes communication with beacon 300 and sends a change instruction instructing the beacon identifier "B1" to be changed to "B2" to beacon 300.

## Description

### Technical Field

The present invention relates to techniques for changing the identifier of a transmitter.

### Related Art

If an identifier transmitted from a device such as an access point, a beacon, or the like is known by a malicious third party, the identifier may be used to improperly access systems, services, and the like. The technique disclosed in Patent Document 1, for example, is known as a technique for preventing such improper use. Patent Document 1 discloses storing a dummy address that is different from an actual MAC address in a region where ID information unique to an access point is stored, and sending that dummy address.

### Background Art Documents

### Patent Documents

Patent Document 1: JP-2013-242282A

### Summary

### Problem to be Solved

In the case where a process for controlling an identifier is carried out by the device that transmits the identifier, as is the case with the invention disclosed in Patent Document 1, it is necessary for the transmitter to be configured to carry out that process. In this case, there is a problem in that the configuration of the transmitter will become complicated and the transmitter will consume an increased amount of power.

It is an object of the present invention to suppress improper use of an identifier transmitted by a transmitter without complicating the configuration of the transmitter.

### Solution

The present invention provides a communication system including: a receiving unit that receives a first identifier transmitted from a transmitter; a determining unit that determines whether a condition for changing the first identifier has been met; and a first sending unit that, in the case where it has been determined that the condition is met, establishes communication with the transmitter and sends a first change instruction to the transmitter instructing the first identifier to be changed to a second identifier.

The communication system may further include at least one communication terminal that includes the receiving unit and accesses a server apparatus in response to the first identifier being received and a server apparatus that provides a service to the at least one communication terminal in response to the access from the at least one communication terminal, the server apparatus may include the determining unit, and the at least one communication terminal may include the first sending unit.

The at least one communication terminal or the server apparatus may further include a generating unit that generates the second identifier.

The determining unit may determine whether a first condition included in the condition is met upon a first communication terminal included in the at least one communication terminal accessing the server apparatus; and the first condition may be that the access by the first communication terminal is the first access to the server apparatus following a reference time, day of the week, or date, that a predetermined amount of time has passed from a point in time when the identifier of the transmitter was changed to the first identifier, or that a total number of times the at least one communication terminal including the first communication terminal has accessed the server apparatus in a period following the point in time has reached a predetermined number.

The determining unit may determine whether a second condition included in the condition is met upon a first communication terminal included in the at least one communication terminal accessing the server apparatus, and the second condition may be that a level of trust of the first communication terminal is lower than a benchmark.

The at least one communication terminal may include a second communication terminal that accesses the server apparatus, after the first communication terminal has accessed the server apparatus, in response to the first identifier being received; the server apparatus may include a second sending unit that sends a second change instruction to the first communication terminal instructing the first identifier to be changed to the second identifier in the case where it has been determined that the first condition is met, and sends the second change instruction to the second communication terminal in the case where it has been determined that the second condition is met; the first communication terminal and the second communication terminal may each have the first sending unit; and the first sending unit may send the first change instruction to the transmitter in the case where the second change instruction has been received.

The present invention provides a communication terminal including: a receiving unit that receives a first identifier transmitted from a transmitter; a determining unit that determines whether a condition for changing the first identifier has been met; and a first sending unit that, in the case where it has been determined that the condition is met, establishes communication with the transmitter and sends a first change instruction to the transmitter instructing the first identifier to be changed to a second identifier.

The communication terminal may further include a generating unit that generates the second identifier.

The present invention provides a communication method including: receiving a first identifier transmitted from a transmitter; determining whether a condition for changing the first identifier has been met; and establishing, in the case where it has been determined that the condition is met, communication with the transmitter and sending a first change instruction to the transmitter instructing the first identifier to be changed to a second identifier.

The present invention provides a program for causing a computer to execute: receiving a first identifier transmitted from a transmitter; determining whether a condition for changing the first identifier has been met; and establishing, in the case where it has been determined that the condition is met, communication with the transmitter and sending a first change instruction to the transmitter instructing the first identifier to be changed to a second identifier.

### Effects of the Invention

According to the present invention, improper use of an identifier transmitted by a transmitter can be suppressed without complicating the configuration of the transmitter.

### Brief Description of Drawings

FIG. 1 illustrates the overall configuration of a communication system according to a first embodiment.
FIG. 2 illustrates the hardware configuration of a communication terminal.
FIG. 3 illustrates the hardware configuration of a server apparatus.
FIG. 4 illustrates an example of a management table.
FIG. 5 illustrates an example of history information.
FIG. 6 illustrates the functional configuration of the communication system according to the first embodiment.
FIG. 7 is a sequence chart illustrating a process for changing a beacon identifier according to the first embodiment.
FIG. 8 illustrates a management table in which a new beacon identifier is stored.
FIG. 9 illustrates a management table following a change finalizing process.
FIG. 10 is a sequence chart illustrating a process for handling an improper terminal.
FIG. 11 is a sequence chart illustrating a retry process.
FIG. 12 illustrates the functional configuration of the communication system according to a second embodiment.
FIG. 13 is a sequence chart illustrating a process for changing a beacon identifier according to the second embodiment.
FIG. 14 illustrates the functional configuration of the communication system according to a third embodiment.
FIG. 15 is a sequence chart illustrating a process for changing a beacon identifier according to the third embodiment.

### Detailed Description

### 1. First Embodiment

Hereinafter, a first embodiment of the present invention will be described with reference to the drawings.

### (1) Configuration

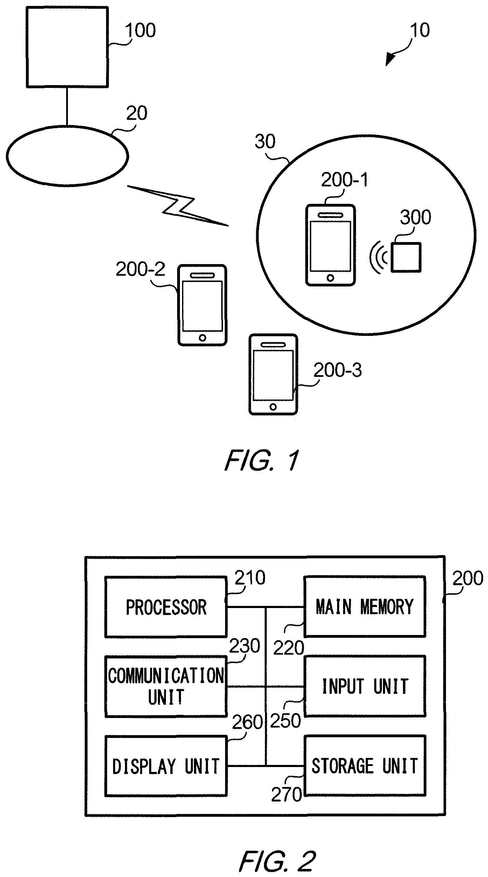

FIG. 1 illustrates the overall configuration of communication system 10 according to the first embodiment. Communication system 10 is a system that provides a service for delivering content to a user who has moved to a specific place as a benefit of visiting that specific place. Communication system 10 includes server apparatus 100, communication terminals 200-1, 200-2, and 200-3, and beacon 300 (an example of a transmitter). In the following descriptions, communication terminals 200-1, 200-2, and 200-3 will be referred to collectively as "communication terminals 200" in cases where there is no particular need to distinguish between those terminals.

Server apparatus 100 and communication terminals 200 are connected over network 20 that includes the Internet and a mobile communication network. Beacon 300 is installed in a shop, for example. Beacon 300 communicates wirelessly with communication terminals 200 present within communication range 30 using a short distance wireless standard such as Bluetooth (registered trademark) Low Energy or the like. Beacon 300 has a function for emitting a beacon identifier stored in advance. Beacon 300 is uniquely identified by this beacon identifier. Although only one beacon 300 is illustrated in FIG. 1, there may be two or more beacons 300. Furthermore, the number of communication terminals 200 is not limited to three.

Communication terminals 200, for example, are smartphones. Communication terminals 200 have a function for checking in with server apparatus 100 upon moving into communication range 30 of beacon 300 and receiving a service corresponding to that beacon 300. Here, to "check in" means to access server apparatus 100 and notifying server apparatus 100 of the current location.

FIG. 2 illustrates the hardware configuration of communication terminal 200. Each communication terminal 200 includes processor 210, main memory 220, communication unit 230, input unit 250, display unit 260, and storage unit 270.

Processor 210 is constituted of, for example, a CPU (Central Processing Unit). Processor 210 controls the various elements of communication terminal 200 by executing programs stored in storage unit 270. Main memory 220 is constituted of, for example, a RAM (Random Access Memory). Main memory 220 temporarily stores programs, data, and so on. Main memory 220 is used as a work area for processor 210. Communication unit 230 is a communication interface connected to network 20. Communication unit 230 communicates with server apparatus 100 via network 20. Communication unit 230 also communicates wirelessly with beacon 300 when in communication range 30 of beacon 300.

Input unit 250 is constituted of, for example, a touch panel and keys. Input unit 250 inputs signals based on user operations into processor 210. Display unit 260 is constituted of, for example, a liquid crystal display. Display unit 260 displays various types of information. Storage unit 270 is constituted of, for example, a flash memory. Various types of programs, data, and so on are stored in storage unit 270. An application that provides a function for checking into server apparatus 100 is also stored in storage unit 270.

Server apparatus 100 has a function for providing a service that distributes content to communication terminal 200 that has checked in. Server apparatus 100 also has a function for changing the beacon identifier in coordination with communication terminal 200 in order to prevent the improper use of the beacon identifier transmitted by beacon 300.

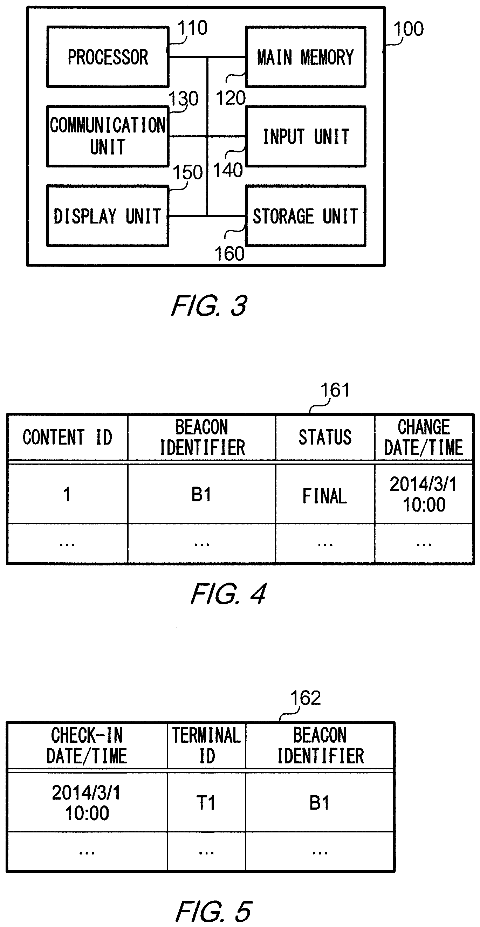

FIG. 3 illustrates the hardware configuration of server apparatus 100. Server apparatus 100 includes processor 110, main memory 120, communication unit 130, input unit 140, display unit 150, and storage unit 160.

Processor 110 is constituted of, for example, a CPU. Processor 110 controls the various elements of server apparatus 100 by executing programs stored in storage unit 160. Main memory 120 is constituted of, for example, a RAM. Main memory 120 temporarily stores programs, data, and so on. Main memory 120 is used as a work area for processor 110. Communication unit 130 is a communication interface connected to network 20. Communication unit 130 communicates with communication terminals 200 via network 20.

Input unit 140 is constituted of, for example, a mouse and a keyboard. Input unit 140 inputs signals based on user operations into processor 110. Display unit 150 is constituted of, for example, a liquid crystal display. Display unit 150 displays various types of information. Storage unit 160 is constituted of, for example, a hard disk drive. Various types of programs, data, and so on are stored in storage unit 160. The content to be delivered to communication terminals 200 is also stored in storage unit 160. This content is points for visiting the shop, coupons for the shop, and so on where beacon 300 is installed, for example. Furthermore, management table 161 that manages beacon identifiers and history information 162 indicating a check-in history are stored in storage unit 160.

FIG. 4 illustrates an example of management table 161. Management table 161 stores a content ID, a beacon identifier, a status, and a change date/time in association with each other. The content ID is information that identifies the content stored in storage unit 160. The beacon identifier is information identifying beacon 300. The status is information indicating a state of the beacon identifier. The change date/time is a date/time when the beacon identifier was changed.

FIG. 5 illustrates an example of history information 162. History information 162 includes a check-in date/time, a terminal ID, and a beacon identifier. The check-in date/time is a date/time when communication terminal 200 checked into server apparatus 100. The terminal ID is information identifying communication terminal 200. The beacon identifier is information identifying beacon 300.

In the example illustrated in FIG. 5, a check-in date/time "March 1, 2014, 10:00", a terminal ID "T1", and a beacon identifier "B1" are associated with each other in history information 162. This indicates that communication terminal 200 identified by the terminal ID "T1" checked in while in communication range 30 of beacon 300 identified by the beacon identifier "B1" at 10:00 on March 1, 2014. History information 162 is updated each time communication terminal 200 checks in server apparatus 100.

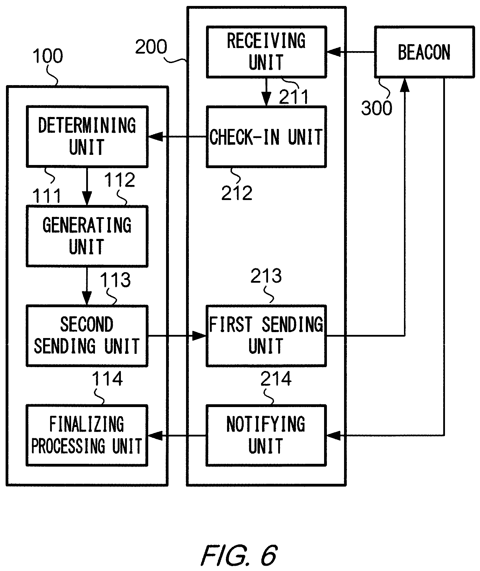

FIG. 6 illustrates the functional configuration of communication system 10 according to the first embodiment. As a result of processor 210 executing applications stored in storage unit 270, communication terminal 200 functions as receiving unit 211, check-in unit 212, first sending unit 213, and notifying unit 214. These functional elements may be implemented by processor 210 working in cooperation with other hardware elements.

Receiving unit 211 receives a first beacon identifier transmitted from beacon 300. Check-in unit 212 checks in server apparatus 100 in response to the first beacon identifier being received. First sending unit 213 establishes communication with beacon 300 and sends, to beacon 300, a first change instruction for changing the first beacon identifier to a second beacon identifier in the case where server apparatus 100 has determined that a condition for changing the first beacon identifier has been met. Notifying unit 214 notifies server apparatus 100 that the beacon identifier of beacon 300 has been changed successfully upon the beacon identifier of beacon 300 being changed in accordance with the change instruction.

As a result of processor 110 executing one or more programs stored in storage unit 160, server apparatus 100 functions as determining unit 111, generating unit 112, second sending unit 113, and finalizing processing unit 114. These functional elements may be implemented by processor 110 working in cooperation with other hardware elements.

Determining unit 111 determines whether a condition for changing the first beacon identifier is met when communication terminal 200 has checked into server apparatus 100. Generating unit 112 generates the second beacon identifier. Second sending unit 113 sends, to communication terminal 200, the content corresponding to beacon 300 along with a second change instruction that instructs the first beacon identifier of beacon 300 to be changed to the second beacon identifier. Finalizing processing unit 114 carries out a process for finalizing the beacon identifier change upon being notified by notifying unit 214 that the beacon identifier of beacon 300 has been changed successfully.

### (2) Operations

### (2-1) Beacon Identifier Change Process

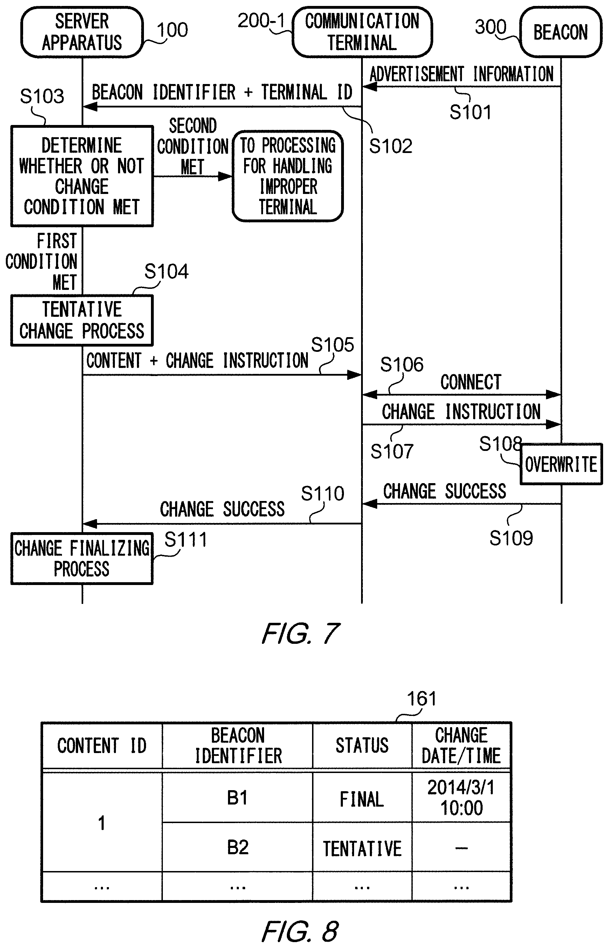

FIG. 7 is a sequence chart illustrating a process for changing the beacon identifier according to the first embodiment. This change process is started when communication terminal 200 has moved into communication range 30 of beacon 300. Here, it is assumed that communication terminal 200-1 (an example of a first communication terminal) has moved into communication range 30 of beacon 300. Beacon 300 transmits advertisement information including the beacon identifier, which is stored in advance. It is assumed here that the beacon identifier of beacon 300 is "B1" (an example of a first identifier). It is also assumed that the terminal ID of communication terminal 200-1 is "T1".

In step S101, receiving unit 211 of communication terminal 200-1 receives advertisement information from beacon 300. This advertisement information includes the beacon identifier "B1" of beacon 300.

In step S102, check-in unit 212 of communication terminal 200-1 checks in server apparatus 100 by sending the beacon identifier "B1" included in the advertisement information received from beacon 300 and its own terminal ID "T1" to server apparatus 100.

Once the beacon identifier and the terminal ID have been received from communication terminal 200-1, in step S103, determining unit 111 of server apparatus 100 determines whether a change condition (an example of a condition) for changing the beacon identifier is met. The change condition includes a first condition for changing the beacon identifier periodically, and a second condition for changing the beacon identifier in response to a check-in by communication terminal 200 having a low level of trust.

The first condition is, for example, one or a combination of two or more of the following conditions:
(a) that it is the first check-in following a reference time, day of the week, or date;
(b) that a predetermined amount of time has passed after the point in time when the beacon identifier was previously changed; and
(c) that a total number (an example of a number of accesses) of check-ins within communication range 30 of beacon 300 in a period following the point in time when the beacon identifier was last changed has reached a predetermined number.

Assume that, for example, the first condition is the stated (a), and the reference time is 10:00. In this case, it is determined, based on history information 162, whether the check-in of communication terminal 200-1 is the first check-in to server apparatus 100 while in communication range 30 of beacon 300 after 10:00 on that day. It is determined that the first condition is met in the case where the check-in of communication terminal 200-1 is the first check-in.

Assume that, for example, the first condition is the stated (b), and the predetermined amount of time is one day. In this case, it is determined whether the date/time at which communication terminal 200-1 checked into server apparatus 100 exceeds one day after the change date/time associated with the beacon identifier "B1" in management table 161. It is determined that the first condition is met in the case where the date/time exceeds one day.

Assume that, for example, the first condition is the stated (c), and the predetermined number of times is 100. In this case, based on history information 162, a total number of times at least one communication terminal 200 including communication terminal 200-1 checked into server apparatus 100 within communication range 30 of beacon 300 is calculated for a period after the change date/time associated with the beacon identifier "B1" in management table 161. It is determined that the first condition is met in the case where this number of times has reached 100.

Assume that, for example, the first condition is a combination (logical sum) of the stated (b) and (c). In this case, it is determined that the first condition is met in the case where at least one of the stated (b) or (c) applies. Note that the logical product of two or more conditions, such as (b) and (c), for example, may be used as the first condition.

The second condition is, for example, that an improper terminal, which is a terminal highly likely to use the beacon identifier improperly has checked in. Improper terminal refers to communication terminal 200 whose level of trust is below a benchmark. Whether communication terminal 200-1 is an improper terminal is determined based on a list of improper terminals created in advance, for example. Alternatively, this may be determined based on a list of proper (not improper) terminals. It is determined that communication terminal 200-1 is an improper terminal in the case where communication terminal 200-1 is on the improper terminal list. In this case, an improper terminal has checked in, and thus the second condition is determined to have been met.

Note that whether communication terminal 200-1 is an improper terminal may be determined based on the check-in date/time of communication terminal 200-1, a check-in history of communication terminal 200-1, a reception history of the beacon identifiers from other beacons installed nearby beacon 300 received by communication terminal 200-1, or the location of communication terminal 200-1.

Server apparatus 100 advances to step S104 in the case where the first condition is met. In step S104, generating unit 112 of server apparatus 100 carries out a tentative change process for the beacon identifier. Specifically, generating unit 112 generates a new beacon identifier that is different from the beacon identifier "B1" received from communication terminal 200-1. It is assumed here that a beacon identifier "B2" (an example of a second identifier) is generated. Generating unit 112 stores the generated beacon identifier "B2" and a status "tentative" in management table 161. This status "tentative" indicates a state that has been changed tentatively.

FIG. 8 illustrates management table 161 in which the new beacon identifier is stored. In the example illustrated in FIG. 8, the current beacon identifier "B1" for beacon 300 and a content ID "1" are associated in management table 161. In this case, the new beacon identifier "B2" and the status "tentative" are stored in association with the content ID "1".

In step S105, second sending unit 113 of server apparatus 100 sends, to communication terminal 200-1, the content corresponding to beacon 300 and a change instruction (an example of the second change instruction) instructing the beacon identifier "B1" of beacon 300 to be changed to the beacon identifier "B2". In the example illustrated in FIG. 8, the current beacon identifier "B1" of beacon 300 and a content ID "1" are associated in management table 161. In this case, the content identified by the content ID "1" is read out from storage unit 160 and sent to communication terminal 200-1. In addition, a change instruction including the beacon identifier "B2" generated in step S 104 is sent to communication terminal 200-1 along with the content.

In step S106, upon the content and change instruction being received from server apparatus 100, first sending unit 213 of communication terminal 200-1 connects to beacon 300 according to a short distance wireless standard. This establishes communication between communication terminal 200-1 and beacon 300.

In step S107, first sending unit 213 of communication terminal 200-1 sends, to beacon 300, a change instruction (an example of the first change instruction) instructing the beacon identifier "B1" of beacon 300 to be changed to the beacon identifier "B2". This change instruction includes the beacon identifier "B2" received from server apparatus 100.

In step S108, upon receiving the change instruction from communication terminal 200-1, beacon 300 overwrites the stored beacon identifier "B1" with the beacon identifier "B2". The beacon identifier of beacon 300 is changed from "B1" to "B2" as a result. From then on, beacon 300 transmits advertisement information including the beacon identifier "B2".

In step S109, beacon 300 sends a success notification, indicating that the beacon identifier has been successfully changed, to communication terminal 200-1. In step S110, upon the success notification being received from beacon 300, notifying unit 214 of communication terminal 200-1 sends a success notification, indicating that the beacon identifier of beacon 300 has been successfully changed, to server apparatus 100. In step S111, upon the success notification being received from communication terminal 200-1, finalizing processing unit 114 of server apparatus 100 carries out a change finalizing process.

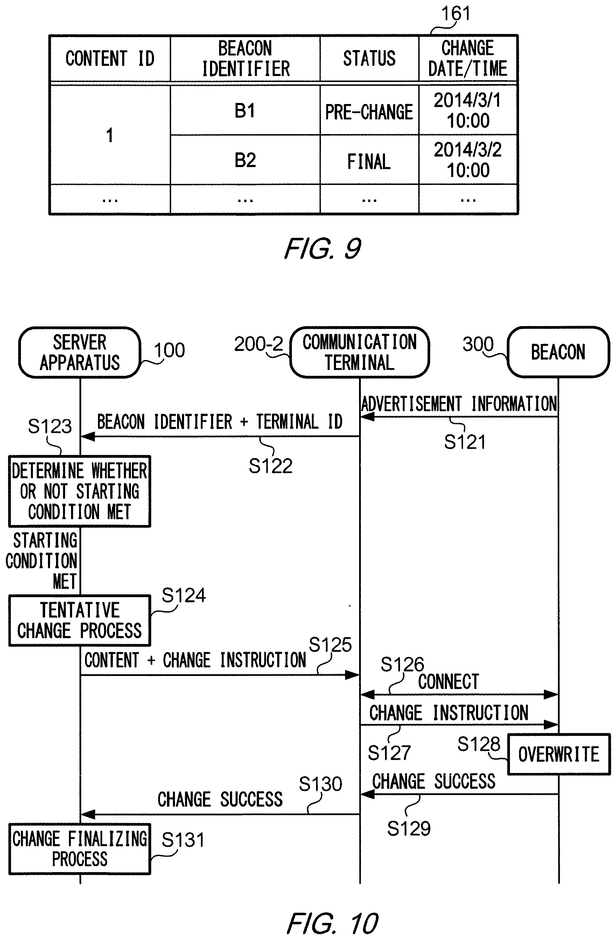

FIG. 9 illustrates management table 161 following the change finalizing process. Specifically, server apparatus 100 changes the status associated with the beacon identifier "B2" in management table 161 from "tentative" to "final". This status "final" indicates a state in which the change has been finalized. The beacon identifier "B2" is used as the beacon identifier of beacon 300 thereafter. Meanwhile, server apparatus 100 changes the status associated with the beacon identifier "B1" in management table 161 from "final" to "pre-change". This status "pre-change" indicates a state in which the beacon identifier had been used before the change but is no longer being used due to the change. The beacon identifier "B1" is not used as the beacon identifier of beacon 300 thereafter. Accordingly, even if communication terminal 200 has checked in using the beacon identifier "B1", server apparatus 100 will not distribute the content to that communication terminal 200.

Note that in the case where it is determined in step S103 that neither the first condition nor the second condition has been met, the content corresponding to beacon 300 is sent to communication terminal 200-1. Upon receiving the content from server apparatus 100, communication terminal 200-1 displays the received content in display unit 260, for example. Communication terminal 200-1 also displays the received content in display unit 260 in the case where the content has been received from server apparatus 100 in the stated step S105. Through this, a user can recognize that the content has been distributed.

On the other hand, in the case where the second condition is met in the stated step S103, server apparatus 100 carries out a process for handling an improper terminal.

### (2-2) Process for Handling Improper Terminal

FIG. 10 is a sequence chart illustrating a process for handling an improper terminal. This process is started when any communication terminal 200 has moved into communication range 30 of beacon 300 after communication terminal 200-1 determined to be an improper terminal. Here, it is assumed that communication terminal 200-2 (an example of a second communication terminal) has moved into communication range 30 of beacon 300 after communication terminal 200-1.

In steps S121 and S122, communication terminal 200-2 checks in server apparatus 100 in the same manner as in the stated steps S101 and S102. In step S123, determining unit 111 of server apparatus 100 determines whether a starting condition for starting a process for changing the beacon identifier of beacon 300 is met. This starting condition is set to a condition whereby, for example, the process is started by the time communication terminal 200-1 determined to be an improper terminal performs its next check-in using the beacon identifier "B1" of beacon 300.

The starting condition is that a predetermined amount of time has passed following the point in time when communication terminal 200-1 determined to be an improper terminal checked in, or that a total number of check-ins within communication range 30 of beacon 300 in a period following the point in time when communication terminal 200-1 determined to be an improper terminal checked in has reached a predetermined number.

Assume that, for example, the starting condition is the former condition and the predetermined amount of time is one day. In this case, it is determined whether the date/time when communication terminal 200-2 checked in exceeds one day after the check-in date/time of communication terminal 200-1 indicated in history information 162. It is determined that the starting condition is met in the case where the date/time exceeds one day. Such a starting condition is useful in the case where, for example, server apparatus 100 limits check-ins by the same communication terminal 200 using the same beacon identifier to once per day.

For example, assume that the starting condition is the latter condition and the predetermined number of times is 1. In this case, it is determined, based on history information 162, whether communication terminal 200-2 checked in within communication range 30 of beacon 300 next after communication terminal 200-1. In the case where communication terminal 200-2 has checked in next after communication terminal 200-1, the total number of check-ins has reached 1, and thus the starting condition is determined to be met.

Server apparatus 100 advances to step S124 in the case where the starting condition is met. In step S124, generating unit 112 of server apparatus 100 carries out the tentative change process in the same manner as in the stated step S104. Like step S105, in step S125, second sending unit 113 of server apparatus 100 sends, to communication terminal 200-2, the content corresponding to beacon 300 and a change instruction instructing the beacon identifier "B1" of beacon 300 to be changed to "B2".

In steps S126 to S130, communication terminal 200-2 and beacon 300 carry out the same processes as those of the stated steps S106 to S110. In step S131, server apparatus 100 carries out the change finalizing process in the same manner as in step S111.

Note that in the case where it is determined in step S123 that the starting condition has not been met, the content corresponding to beacon 300 is sent to communication terminal 200-2. Then, the process for handling an improper terminal is carried out again upon any of communication terminals 200 moving into communication range 30 of beacon 300.

### (2-3) Retry Process

In the case where an error has occurred in communication terminal 200-1 or beacon 300 during the processing from the stated steps S106 to S110, an error notification, indicating that the change of the beacon identifier of beacon 300 has failed, is sent from communication terminal 200-1 to server apparatus 100, or the success notification is not sent from communication terminal 200-1 within a predetermined amount of time and the process times out. Such a situation occurs, for example, in the case where the battery of communication terminal 200-1 has died during the processing from steps S106 to S110. A retry process is carried out in this case. Although a retry process carried out in the process for changing the beacon identifier will be described here, it should be noted that a similar retry process may be carried out in the process for handling an improper terminal as well.

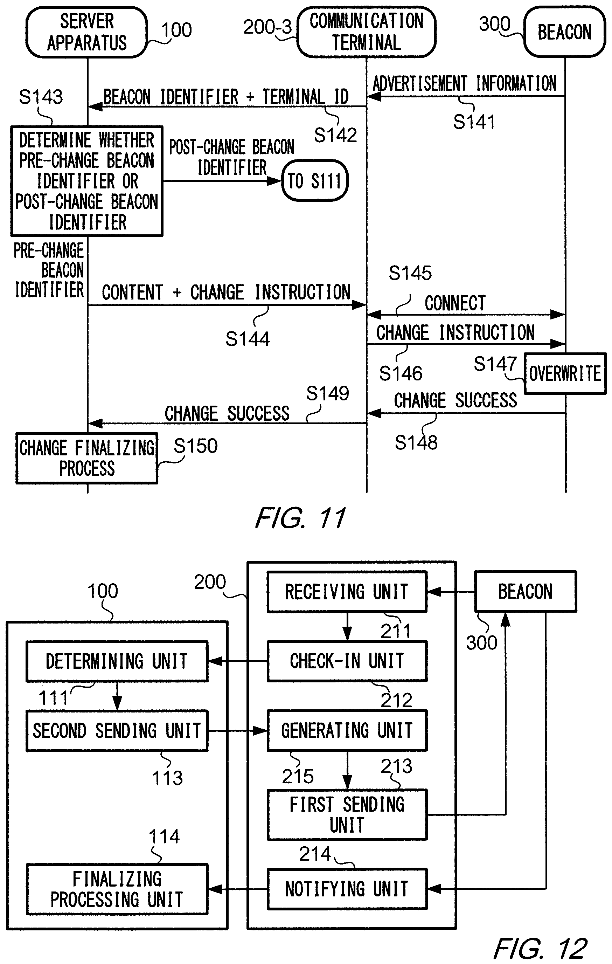

FIG. 11 is a sequence chart illustrating the retry process. This retry process is started when any of communication terminals 200 has moved into communication range 30 of beacon 300 after server apparatus 100 has received an error notification from communication terminal 200-1 or the success notification has not been sent from communication terminal 200-1 within the predetermined amount of time and the process has timed out. Here, it is assumed that communication terminal 200-3 has moved into communication range 30 of beacon 300 after communication terminal 200-1.

In steps S141 and S142, communication terminal 200-3 checks in server apparatus 100 in the same manner as in steps S101 and S102. In step S143, determining unit 111 of server apparatus 100 determines whether the beacon identifier received from communication terminal 200-3 is the pre-change "B1" or the post-change "B2".

The case where the beacon identifier received from communication terminal 200-3 is the post-change "B2" indicates that an error has occurred in beacon 300 or communication terminal 200-1 after the beacon identifier stored in beacon 300 was overwritten from "B1" to "B2". In this case, server apparatus 100 advances to the stated step S111 and carries out the change finalizing process. As a result, the status associated with the beacon identifier "B2" in management table 161 is changed from "tentative" to "final", and the status associated with the beacon identifier "B1" is changed from "final" to "pre-change", as indicated in FIG. 9.

On the other hand, the case where the beacon identifier received from communication terminal 200-3 is the pre-change "B1" indicates that an error has occurred in beacon 300 or communication terminal 200-1 before the beacon identifier stored in beacon 300 was overwritten from "B1" to "B2". Server apparatus 100 advances to step S 144 in this case.

Like the stated step S105, in step S144, second sending unit 113 of server apparatus 100 sends, to communication terminal 200-3, the content corresponding to beacon 300 and a change instruction instructing the beacon identifier "B1" of beacon 300 to be changed to "B2". This change instruction includes the beacon identifier "B2" generated in the stated step S104.

In steps S145 to S149, communication terminal 200-3 and beacon 300 carry out the same processes as in steps S106 to S110. In step S150, server apparatus 100 carries out the change finalizing process in the same manner as in step S111.

In communication system 10, any party can obtain the beacon identifier of beacon 300 by bringing communication terminal 200 into communication range 30 of beacon 300. If, for example, the beacon identifier is not changed, the beacon identifier may be copied by a malicious user, who may then repeatedly check into server apparatus 100 using the copied beacon identifier and obtain content improperly. However, according to the first embodiment, the beacon identifier is periodically changed, and thus even if the beacon identifier is copied by a malicious user, that beacon identifier can only be used to check in for a limited period of time. Accordingly, the improper use of beacon identifiers transmitted from beacon 300 can be suppressed.

Furthermore, according to the first embodiment, in the case where an improper terminal has checked in, the processing transits to the process for handling an improper terminal, and a process for changing the beacon identifier is then carried out via communication terminal 200 that has checked in within communication range 30 of beacon 300 after the improper terminal. In this case, the improper terminal cannot know the post-change beacon identifier, which makes it possible to prevent the post-change beacon identifier from being copied by the improper terminal.

Furthermore, according to the first embodiment, beacon 300 changes the beacon identifier in response to the change instructions from server apparatus 100 and communication terminal 200. In this case, it is not necessary for beacon 300 to carry out complex processing, which avoids complicating the configuration of beacon 300 and also suppresses an increase in power consumption.

Furthermore, according to the first embodiment, only some of communication terminals 200 that have received the advertisement information from beacon 300 connect to beacon 300 and carry out the process for changing the beacon identifier. Accordingly, the power consumed by beacon 300 can be reduced as compared to a case where all of communication terminals 200 that have received the advertisement information from beacon 300 connect to beacon 300 and carry out the process for changing the beacon identifier.

### 2. Second Embodiment

Hereinafter, a second embodiment of the present invention will be described with reference to the drawings. In the second embodiment, communication terminal 200 carries out the process for generating a new beacon identifier instead of server apparatus 100. The following descriptions will focus on points that differ from the first embodiment.

The configuration of communication system 10 is basically the same as the configuration according to the first embodiment. However, the functional configuration of communication system 10 according to the second embodiment differs from that of communication system 10 according to the first embodiment.

FIG. 12 illustrates the functional configuration of communication system 10 according to the second embodiment. In addition to receiving unit 211, check-in unit 212, first sending unit 213, and notifying unit 214 described in the first embodiment, communication terminal 200 functions as generating unit 215. Like generating unit 112 of server apparatus 100 described in the first embodiment, generating unit 215 generates the second beacon identifier.

Server apparatus 100 functions as determining unit 111, second sending unit 113, and finalizing processing unit 114 described in the first embodiment. However, second sending unit 113 sends, to communication terminal 200, the change instruction instructing the beacon identifier of beacon 300 to be changed, along with the content corresponding to beacon 300. Note that in the second embodiment, it is not necessary for server apparatus 100 to include generating unit 112.

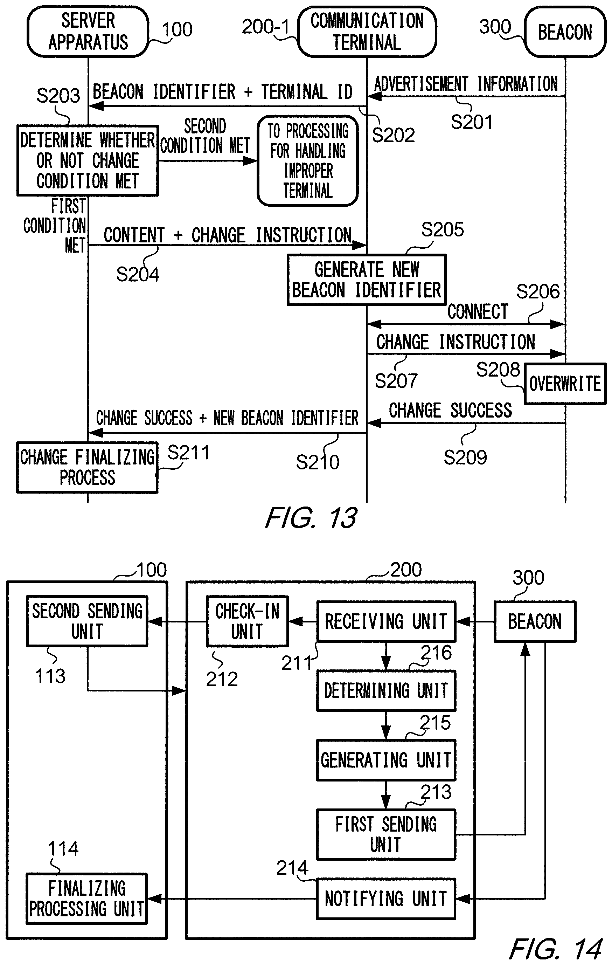

FIG. 13 is a sequence chart illustrating a process for changing the beacon identifier according to the second embodiment. The processes of steps S201 to S203 are the same as the processes of steps S101 to S103 described in the first embodiment. Server apparatus 100 advances to step S204 in the case where the first condition is met in step S203.

In step S204, second sending unit 113 of server apparatus 100 sends, to communication terminal 200-1, the change instruction instructing the beacon identifier of beacon 300 to be changed.

In step S205, upon the change instruction being received from server apparatus 100, generating unit 215 of communication terminal 200-1 generates a new beacon identifier that is different from the beacon identifier "B1" received from beacon 300. It is assumed here that the beacon identifier "B2" is generated.

The processes of steps S206 to S209 are the same as the processes of steps S106 to S109 described in the first embodiment. In step S210, notifying unit 214 of communication terminal 200-1 sends the beacon identifier "B2" newly generated in step S205 and a success notification to server apparatus 100.

In step S211, upon the new beacon identifier and the success notification being received from communication terminal 200-1, finalizing processing unit 114 of server apparatus 100 carries out a change finalizing process. Specifically, server apparatus 100 stores the beacon identifier "B2" and the status "final" in management table 161 in association with the content ID "1 ", as indicated in FIG. 9. Meanwhile, server apparatus 100 changes the status associated with the beacon identifier "B1" in management table 161 from "final" to "pre-change".

Similarly, communication terminal 200 may generate a new beacon identifier instead of server apparatus 100 in the process for handling an improper terminal as well. Specifically, in the case where the starting condition is determined to have been met, server apparatus 100 sends, to communication terminal 200, the change instruction instructing the beacon identifier of beacon 300 to be changed. Upon receiving the change instruction, communication terminal 200 generates a new beacon identifier that is different from the beacon identifier "B1" received from beacon 300. Meanwhile, upon receiving the success notification from beacon 300, communication terminal 200 sends the newly-generated beacon identifier and the success notification to server apparatus 100.

According to the second embodiment, the process for generating a new beacon identifier is carried out by communication terminal 200, and thus the processing burden on server apparatus 100 is lightened.

### 3. Third Embodiment

Hereinafter, a third embodiment of the present invention will be described with reference to the drawings. In the third embodiment, the process for changing the beacon identifier is basically carried out between communication terminal 200 and beacon 300. The following descriptions will focus on points that differ from the first embodiment.

The configuration of communication system 10 is basically the same as the configuration according to the first embodiment. However, the functional configuration of communication system 10 according to the third embodiment differs from the functional configuration of communication system 10 according to the first embodiment.

FIG. 14 illustrates the functional configuration of communication system 10 according to the third embodiment. In addition to receiving unit 211, check-in unit 212, first sending unit 213, and notifying unit 214 described in the first embodiment, communication terminal 200 functions as determining unit 216 and generating unit 215. Like determining unit 111 of server apparatus 100 described in the first embodiment, determining unit 216 determines whether a condition for changing the first beacon identifier has been met. Like generating unit 112 of server apparatus 100 described in the first embodiment, generating unit 215 generates the second beacon identifier.

Server apparatus 100 functions as second sending unit 113 and finalizing processing unit 114 described in the first embodiment. However, second sending unit 113 only sends the content corresponding to beacon 300 to communication terminal 200. Note that in the third embodiment, it is not necessary for server apparatus 100 to include determining unit 111 and generating unit 112.

Meanwhile, information necessary for determining the first condition and the second condition is sent from server apparatus 100 to communication terminal 200 at a predetermined timing. For example, each time server apparatus 100 updates management table 161 and history information 162, updated management table 161 and history information 162 are sent to communication terminals 200. As another example, communication terminal 200 may inquire with server apparatus 100 and obtain the information necessary for determining the first condition and the second condition.

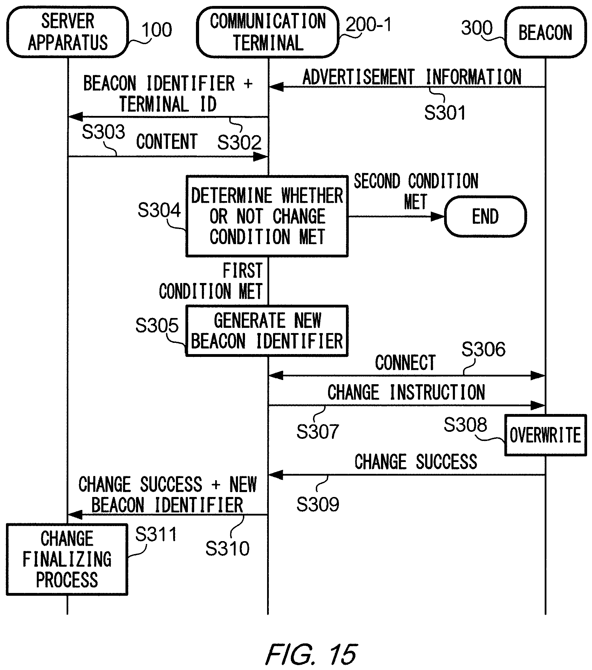

FIG. 15 is a sequence chart illustrating a process for changing the beacon identifier according to the third embodiment. The processes of steps S301 and S302 are the same as the processes of steps S101 and S102 described in the first embodiment. In step S303, second sending unit 113 of server apparatus 100 sends the content corresponding to beacon 300 to communication terminal 200-1. Upon receiving the content from server apparatus 100, communication terminal 200-1 displays the received content in display unit 260, for example.

In step S304, determining unit 216 of communication terminal 200-1 determines whether a change condition for changing the beacon identifier is met, in the same manner as in step S103 described in the first embodiment.

Server apparatus 100 advances to step S305 in the case where the first condition is met. In step S305, generating unit 215 of communication terminal 200-1 generates a new beacon identifier that is different from the beacon identifier "B1" received from beacon 300. It is assumed here that the beacon identifier "B2" is generated.

The processes of steps S306 to S309 are the same as the processes of steps S106 to S109 described in the first embodiment. In step S310, notifying unit 214 of communication terminal 200-1 sends the beacon identifier "B2" newly generated in step S305 and a success notification to server apparatus 100.

In step S311, upon the new beacon identifier and the success notification being received from communication terminal 200-1, finalizing processing unit 114 of server apparatus 100 carries out a change finalizing process. Specifically, server apparatus 100 stores the beacon identifier "B2" and the status "final" in management table 161 in association with the content ID "1 ", as indicated in FIG. 9. Meanwhile, server apparatus 100 changes the status associated with the beacon identifier "B1" in management table 161 from "final" to "pre-change".

On the other hand, in the case where the second condition is met in step S304, communication terminal 200-1 ends this processing. In this case, the processes of steps S305 to S311 are not carried out.

According to the third embodiment, server apparatus 100 does carry out the process for distributing content but basically does not contribute to the process for changing the beacon identifier, and thus the beacon identifier can be changed without going through server apparatus 100.

### 4. Modifications

The present invention is not limited to the aforementioned first to third embodiments. For example, the first to third embodiments may be varied as described hereinafter. The following modifications may also be combined.

### (1) Modification 1

In the aforementioned first to third embodiments, the change conditions may include a third condition for changing the beacon identifier in response to the number of check-ins per unit of time exceeding a threshold. The third condition is, for example, that the number of check-ins per unit of time within communication range 30 of the same beacon 300 exceeds a threshold. For example, the total number of check-ins per unit of time within communication range 30 of beacon 300 is calculated based on history information 162. It is determined that the third condition is met in the case where this number of times exceeds the threshold. The same processing as that carried out in the case where the first condition is met is then carried out in the case where the third condition is met.

### (2) Modification 2

In the aforementioned first to third embodiments, the change conditions may include a fourth condition for changing the beacon identifier in response to a change in the content corresponding to beacon 300. The fourth condition is, for example, that a check-in is the first check-in within communication range 30 of beacon 300 after the content corresponding to beacon 300 has been changed. For example, it is determined, based on history information 162, whether the check-in of communication terminal 200 is the first check-in to server apparatus 100 within communication range 30 of beacon 300 after the content corresponding to beacon 300 has been changed. It is determined that the fourth condition is met in the case where the check-in of communication terminal 200 is the first check-in. The same processing as that carried out in the case where the first condition is met is then carried out in the case where the fourth condition is met.

### (3) Modification 3

In the aforementioned first and second embodiments, server apparatus 100 may allow or reject a check-in from an improper terminal in the case where it has been determined that the second condition is met. For example, in the case where a check-in from an improper terminal is allowed, server apparatus 100 sends the content to communication terminal 200 determined to be an improper terminal. This is because the user of communication terminal 200 determined to be an improper terminal will not necessarily use the beacon identifier improperly. On the other hand, in the case where a check-in from an improper terminal is rejected, server apparatus 100 does not send the content to communication terminal 200 determined to be an improper terminal. As another example, server apparatus 100 may determine whether to allow or reject check-ins based on the level of trust of each communication terminal 200.

### (4) Modification 4

In the aforementioned first to third embodiments, an authorized party such as a party in charge of the shop may be capable of changing the beacon identifier. In this case, the authorized party operates communication terminal 200 within communication range 30 of beacon 300 and enters the beacon identifier change instruction. In response to this change instruction being entered, communication terminal 200 requests server apparatus 100 to generate a new beacon identifier and obtains the generated beacon identifier, or generates the new beacon identifier itself. The processes thereafter are the same as the processes of the stated steps S106 to S111 or S206 to S211.

### (5) Modification 5

In the aforementioned first and second embodiments, communication terminal 200 may make a primary determination as to whether the change condition is met, and server apparatus 100 may make a secondary determination as to whether the change condition is met. For example, assume that the change condition is (a) of the stated first condition. In this case, in the primary determination, it is determined whether the current time is in a predetermined time span. In the secondary determination, it is determined whether the check-in is the first check-in following a reference time, day of the week, or date.

For example, assume that the reference time is 10:00. In this case, communication terminal 200-1 determines whether the current time is in the morning. In the case where the current time is not in the morning, the change condition is not met, and thus communication terminal 200-1 ends this process without inquiring with server apparatus 100. On the other hand, in the case where the current time is in the morning, the change condition is met, and thus communication terminal 200-1 inquires with server apparatus 100 as to whether the change condition is met. Specifically, as in the stated step S102, communication terminal 200-1 sends the beacon identifier "B1" of beacon 300 and the terminal ID to server apparatus 100. The processes thereafter are the same as the processes of the stated steps S 103 to S111.

According to this modification, server apparatus 100 need not determine whether the change condition is met in the case where communication terminal 200 has determined that the change condition is not met, and thus the processing burden on server apparatus 100 can be lightened.

### (6) Modification 6

The stated beacon identifier may be constituted of a UUID, a Major value, and a Minor value according to the iBeacon (registered trademark) framework that uses Bluetooth Low Energy. In this case, a new beacon identifier may be generated by changing both the Major value and the Minor value. As another example, a new beacon identifier may be generated by changing either the Major value or the Minor value. Alternatively, a value targeted for change by the user may be changed. By diversifying the methods for changing the beacon identifier in this manner, the post-change beacon identifier becomes difficult to identify, which makes it possible to increase the level of security.

### (7) Modification 7

In the aforementioned first and second embodiments, server apparatus 100 may send a change instruction, instructing the beacon identifier of a specified beacon 300 to be changed to a new beacon identifier, to all of communication terminals 200 at a given timing. In this case, the new beacon identifier may be generated by server apparatus 100 as in the first embodiment, or may be generated by communication terminal 200 as in the second embodiment. Upon moving into communication range 30 of the specific beacon 300, communication terminal 200 connects to beacon 300 and sends the change instruction instructing the beacon identifier of beacon 300 to be changed to a new beacon identifier.

According to this modification, regardless of whether communication terminal 200 is present in communication range 30 of beacon 300, the beacon identifier of beacon 300 can be changed quickly upon communication terminal 200 moving into communication range 30 of beacon 300.

### (8) Modification 8

In the aforementioned first to third embodiments, the content may be stored in a device aside from server apparatus 100. For example, in the case where the content is stored in storage unit 270 of each communication terminal 200, communication terminal 200 obtains the content ID corresponding to beacon 300 from server apparatus 100 by checking into server apparatus 100. Upon obtaining the content ID from server apparatus 100, communication terminal 200 may read out the content identified by the obtained content ID from storage unit 270 and display that content in display unit 260.

### (9) Modification 9

The stated beacon 300 is an example of a transmitter that transmits an identifier. The transmitter is not limited to beacon 300. For example, the transmitter may be an acoustic wave device that transmits an identifier over acoustic waves, an access point, or the like.

### (10) Modification 10

Although the aforementioned first to third embodiments describe an example in which communication terminal 200 is a smartphones, communication terminal 200 is not limited to a smartphone. For example, communication terminal 200 may be a tablet computer, a cellular phone, a laptop personal computer, a music player, or a mobile game device.

### (11) Modification 11

The aforementioned first to third embodiments describe an example in which the functions of server apparatus 100 and the functions of communication terminal 200 are realized by software. However, at least some of the functions of server apparatus 100 may be realized by hardware. Likewise, at least some of the functions of communication terminal 200 may be realized by hardware.

### (12) Modification 12

The programs executed by processor 110 of server apparatus 100 may be downloaded from the Internet or the like over a communication channel. Likewise, the programs executed by processor 210 of communication terminal 200 may be downloaded from the Internet or the like over a communication line. These programs may be provided in a state in which the programs have been recorded onto a computer-readable recording medium such as a magnetic recording medium (magnetic tape, a magnetic disk, or the like), an optical recording medium (an optical disk or the like), a magneto-optical recording medium, a semiconductor memory, or the like.

### Description of Reference Numerals

- 10:: communication system
- 100:: server apparatus
- 111:: determining unit
- 112:: generating unit
- 113:: second sending unit
- 114:: finalizing processing unit
- 200:: communication terminal
- 211:: receiving unit
- 212:: check-in unit
- 213:: first sending unit
- 214:: notifying unit
- 215:: generating unit
- 216:: determining unit
- 300:: beacon

## Claims

1. A communication system comprising:
a receiving unit that receives a first identifier transmitted from a transmitter;
a determining unit that determines whether a condition for changing the first identifier has been met; and
a first sending unit that, in the case where it has been determined that the condition is met, establishes communication with the transmitter and sends a first change instruction to the transmitter instructing the first identifier to be changed to a second identifier.

2. The communication system according to claim 1, further comprising:
at least one communication terminal that includes the receiving unit and accesses a server apparatus in response to the first identifier being received; and
a server apparatus that provides a service to the at least one communication terminal in response to the access from the at least one communication terminal,
wherein the server apparatus includes the determining unit; and
the at least one communication terminal includes the first sending unit.

3. The communication system according to claim 2, wherein
the at least one communication terminal or the server apparatus further includes a generating unit that generates the second identifier.

4. The communication system according to claim 2 or 3, wherein
the determining unit determines whether or not a first condition included in the condition is met upon a first communication terminal included in the at least one communication terminal accessing the server apparatus; and
the first condition is that the access by the first communication terminal is the first access to the server apparatus following a reference time, day of the week, or date, that a predetermined amount of time has passed from a point in time when the identifier of the transmitter was changed to the first identifier, or that a total number of times the at least one communication terminal including the first communication terminal has accessed the server apparatus in a period following the point in time has reached a predetermined number.

5. The communication system according to any one of claims 2 to 4, wherein
the determining unit determines whether a second condition included in the condition is met upon a first communication terminal included in the at least one communication terminal accessing the server apparatus; and
the second condition is that a level of trust of the first communication terminal is lower than a benchmark.

6. The communication system according to claim 4 or 5, wherein
the at least one communication terminal includes a second communication terminal that accesses the server apparatus, after the first communication terminal has accessed the server apparatus, in response to the first identifier being received;
the server apparatus includes a second sending unit that sends a second change instruction to the first communication terminal instructing the first identifier to be changed to the second identifier in the case where it has been determined that the first condition is met, and sends the second change instruction to the second communication terminal in the case where it has been determined that the second condition is met;
the first communication terminal and the second communication terminal each has the first sending unit; and
the first sending unit sends the first change instruction to the transmitter in the case where the second change instruction has been received.

7. A communication terminal comprising:
a receiving unit that receives a first identifier transmitted from a transmitter;
a determining unit that determines whether a condition for changing the first identifier has been met; and
a first sending unit that, in the case where it has been determined that the condition is met, establishes communication with the transmitter and sends a first change instruction to the transmitter instructing the first identifier to be changed to a second identifier.

8. The communication terminal according to claim 7, further comprising:
a generating unit that generates the second identifier.

9. A communication method comprising:
receiving a first identifier transmitted from a transmitter;
determining whether or not a condition for changing the first identifier has been met; and
establishing, in the case where it has been determined that the condition is met, communication with the transmitter and sending a first change instruction to the transmitter instructing the first identifier to be changed to a second identifier.

10. A program for causing a computer to execute a process, the process comprising:
receiving a first identifier transmitted from a transmitter;
determining whether or not a condition for changing the first identifier has been met; and
establishing, in the case where it has been determined that the condition is met, communication with the transmitter and sending a first change instruction to the transmitter instructing the first identifier to be changed to a second identifier.
